# EUROPÄISCHE PATENTSCHRIFT

(11) **EP 0 577 878 B1**
(45) Veröffentlichungstag und Bekanntmachung des Hinweises auf die Patenterteilung: **25.09.1996**
(21) Anmeldenummer: 92111816.2
(22) Anmeldetag: 10.07.1992
(51) Int. Cl.: H01M 2/10, E05B 49/00

(54) **Gehäuse für eine elektronische Anordnung, z.B. für den Schlüsselteil eines Kfz-Schlieszsystemes**
Case for an electronic apparatus used for example as key for a motor vehicle locking system
Boîtier pour un dispositif électronique utilisé par exemple comme clé pour le système de fermeture d'un véhicule à moteur

(43) Veröffentlichungstag der Anmeldung: 12.01.1994
(73) Patentinhaber: SIEMENS AKTIENGESELLSCHAFT, 80333 München (DE)
(72) Erfinder: Kraiczyk, Josef, W-8400 Regensburg (DE)

(56) Entgegenhaltungen:
- EP-A- 0 088 699
- EP-A- 0 267 429
- WO-A-90/10776
- GB-A- 2 197 746
- US-A- 4 436 792

## Beschreibung

Die Erfindung geht von dem im Oberbegriff des Patentanspruches 1 definierten Gegenstand aus, der für sich dem einschlägigen Fachmann vielfach vorbekannt ist, und zwar auch dem Fachmann für den einen optischen Sender oder Funksender enthaltenden Schlüsselteil eines fernsteuerbaren Kfz-Schließsystemes.

Die Erfindung betrifft also den Schutz einer Elektronik vor Wasser und Staub in einem Gehäuse, das der Benutzer - z.B. der Fahrer eines Kfz - immer wieder einmal zu öffnen hat, z.B. um eine Batterie in seinem Funkschlüssel zu wechseln.

Die Erfindung wurde zwar zunächst für ein fernsteuerbares Kfz-Schließsystem entwickelt. Es zeigte sich aber, daß sie darüber hinaus auch auf andere, unter den genannten Oberbegriff fallende Gehäuse anwendbar ist.

Die Aufgabe,
- mit möglichst wenig Aufwand zuverlässig über lange Benutzungszeiten Undichtigkeiten bei einem möglichst leichten, handlichen und leicht handhabbaren Gehäuse zu vermeiden, das relativ häufig und oft recht wenig sorgfältig von Laien geöffnet wird,
wird erfindungsgemäß durch den im Patentanspruch 1 definierten Gegenstand gelöst.

Die in den Unteransprüchen definierten Gegenstände gestatten, zusätzliche Vorteile zu erreichen. U.a. gestatten nämlich die zusätzlichen Maßnahmen gemäß dem Patentanspruch
- 2,: die einzelnen Bestandteile des Gehäuses - den Boden, den Deckel und den Schaft - auf einfache Weise mit ausreichender Präzision massenfertigungsgeeignet herzustellen, besonders wenn dazu z.B. ein Spritzgußverfahren benutzt wird,
- 3,: die gegenseitige Befestigung sowie die zuverlässige Abdichtung mit möglichst einfachen Mitteln zu erreichen, und
- 4,: auf den Flächen des Bodens und / oder des Deckels z.B. Bedienelemente, also z.B. Tasten, und / oder Anzeigeelemente, also z.B. Lämpchen und / oder ein LCD-Element, anbringen zu können.

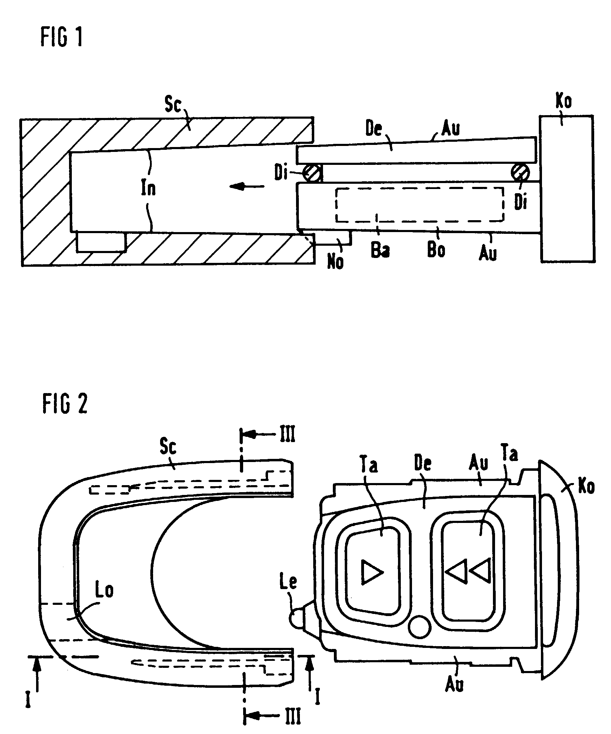

Die Erfindung und Weiterbildungen derselben werden anhand der in den vier Figuren gezeigten Schemen von Ausführungsbeispielen der Erfindung weiter erläutert, welche der Übersichtlichkeit wegen jeweils möglichst einfach dargestellt wurden. Es handelt sich um ein bevorzugtes Beispiel für ein Schlüsselteil eines optisch fernsteuerbaren Kfz-Schließsystemes. Dabei zeigt die Figur
- 1: eine Seitenansicht des Bodens, des Dichtungsringes, des Deckels und einen Schnitt durch den Schaft bei dem Beginn des Montierens des Gehäuses,
- 2: eine Draufsicht auf das in der Figur 1 gezeigte Beispiel angenähert zum gleichen Zeitpunkt,
- 3: einen in der Figur 2 angedeuteten Schnitt durch den Schaft, und
- 4: das fertig montierte Gehäuse.

Das gezeigte erfindungsgemäße Gehäuse des Schlüsselteils eines optisch fernsteuerbaren Kfz-Schließsystemes enthält einen Gehäusekern, der hier aus dem in den Figuren 1, 2 und 4 aus verschiedenen Richtungen schematisch gezeigten Deckel De sowie aus dem in der Figur 1 gezeigten Boden Bo besteht. Der Boden Bo bildet zusammen mit dem in den Figuren 1, 2 und 4 gezeigten Kopf Ko einen gemeinsamen Körper Bo/Ko. Zwischen den Boden Bo und den Deckel De ist ein umlaufender elastischer, in der Figur 1 gezeigter Dichtungsring Di gelegt. Im Gehäusekern Bo/De ist wasser- und staubgeschützt die elektronische Anordnung - hier eine Steuer- und Sendeelektronik des Schließsystemes - angebracht, von der hier wegen der Übersichtlichkeit nur die Batterie Ba angedeutet ist.

Der Benutzer der gezeigten Anordnung soll von Zeit zu Zeit den Gehäusekern Bo/De leicht öffnen, die Batterie Ba leicht austauschen und ebenso leicht das Gehäuse wieder wasser- und staubdicht verschließen können. Dabei soll die Herstellung eines solchen Gehäuses wenig Aufwand erfordern und massenfertigungsgeeignet sein, und das Gehäuse soll möglichst verschleißfest sein und wenig Gewicht besitzen.

Erfindungsgemäß haben zwei gegenüberliegenden Außenflächen des montierten Gehäusekernes Bo/De eine keilförmige Form insofern, als zwei gegenüberliegende Außenoberflächen, vgl. Au, dieses Gehäusekernes - und zwar zumindest an Stellen, an denen der Gehäusekern Bo/De später zusammengepreßt werden soll - zueinander in einer Längsachsenrichtung eine keilförmige Form bilden, sobald der Deckel (De) auf den Dichtungsring (Di) und dieser Dichtungsring (Di) auf den Boden (Bo) gelegt und der Deckel (De) gegen den Boden (Bo) gepreßt ist.

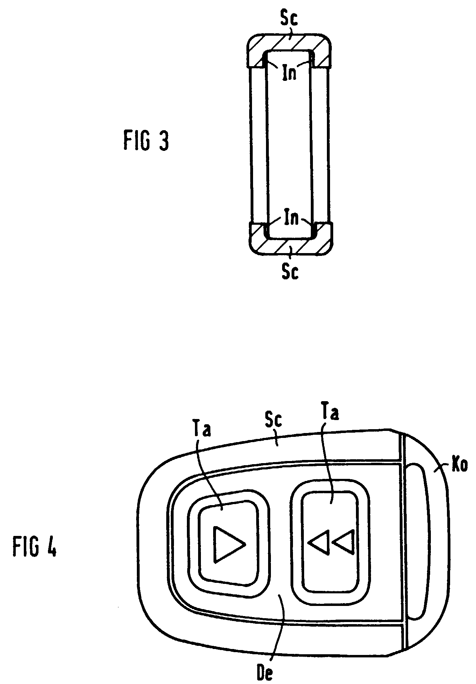

Zum Zusammenpressen wird bei der Erfindung ein Schaft, vgl. in den Figuren 1 bis 4 den dort gezeigten U-förmigen Schaft Sc, mit zwei gegenüberliegenden keilförmigen, besonders in der Figur 3 gezeigten Innenoberflächen In. Die Form dieser Innenoberflächen In des Schaftes Sc - insbes. der Winkel des Keils - ist an die Form betreffenden keilförmigen Außenoberflächen Au des Gehäusekernes Bo/De mehr oder weniger angepaßt. Sobald der Gehäusekern Bo/De - insbes. durch Drücken auf den Kopf Ko - in Längsrichtung in den Schaft Sc hineingeschoben wird, pressen die keilförmigen Innenoberflächen In des Schaftes Sc so auf die keilförmigen Außenoberflächen Au des Gehäusekernes Bo/De, daß der Dichtungsring Di fest zusammengequetscht wird und dadurch den Wasser- und Staubschutz für die Anordnung Ba erreicht wird. Dann hat das Gehäuse Bo/De/Sc die in der Figur 4 gezeigte Form. Der Schaft bedeckt dann nur Teile der Ränder des Gehäusekernes Bo/De, aber nicht mehr die zwischen den U-Schenkeln des Schaftes Sc liegenden Abschnitte der Außenoberflächen des Deckels De und des Bodens Bo.

Das Gehäuse kann von seinem Benutzter leicht wieder geöffnet werden, indem er den Gehäusekern Bo/De - insbes. am Kopf Ko - wieder aus dem Schaft Sc herauszieht. Sobald er den Gehäusekern Bo/De wieder in den Schaft Sc geschoben hat, wird wieder der Dichtungsring Di fest zusammengepreßt und der Schutz der elektrischen Anordnung gegen Wasser und Staub wieder auf einfache Weise erreicht. Dadurch ist also die erfindungsgemäß Aufgabe gelöst, mit möglichst wenig Aufwand zuverlässig über lange Benutzungszeiten Undichtigkeiten bei einem möglichst leichten, handlichen, leicht handhabbaren Gehäuse zu vermeiden, obwohl das Gehäuse relativ häufig und oft recht wenig sorgfältig von Laien geöffnet wird.

Bei dem gezeigten Beispiel ist am Gehäuse Bo/De/Sc, und zwar unmittelbar am Boden Bo, eine in der Figur 2 gezeigte Infrarotleuchte Le angebracht, die nach dem Hineinschieben durch das in der Figur 2 gezeigte Loch Lo des Schaftes Sc hindurchragt und die optische Fernsteuerung des Schließsystemes durch entsprechende Betätigung von Tasten Ta ermöglicht.

Solche Einheiten Ta auf dem Gehäuse Bo/De/Sc, können jedenfalls teilweise auch Anzeigeeinheiten Ta darstellen, z.B. LCD-Einheiten, welche dem Benutzer Informationen vermitteln sollen. Sie sollen z.B. den Zustand der Steuereinheit in seinem Gehäuse Bo/De/Sc und / oder z.B. den Zustand der Schlösser in seinem Kfz anzeigen, indem im Gehäuse Bo/De/Sc zusätzlich ein Empfänger angebracht sein kann, welcher durch Fernübertragung entsprechende Daten vom Kfz her zugesendet erhält.

Die einzelnen Bestandteile des Gehäuses Bo/De/Sc - insbes. der Boden Bo, der Deckel De und der Schaft Sc - können auf einfache Weise mit ausreichender Präzision massenfertigungsgeeignet hergestellt werden, wenn der Boden Bo, der Deckel De und der Schaft Sc aus dauerhaftem, nicht zu weichen Kunststoff bestehen. Besonders geeignet erweist sich die Herstellung durch Spritzguß.

Um die gegenseitige Befestigung sowie die zuverlässige Abdichtung mit möglichst einfachen Mitteln zu erreichen, kann der Schaft Sc und / oder der Gehäusekern Bo/De eine elastische Zunge mit einer Noppe No enthalten. Diese Noppe No greift, wenn der Gehäusekern Bo/De in den Schaft Sc geschoben ist, als Widerhaken No in eine Aussparung Sp des Gehäusekernes Bo/De bzw. des Schaftes Sc ein. Dann, wenn der Gehäusekern Bo/De in den Schaft Sc geschoben ist, kann auf die Zunge von außen her so gedrückt werden, daß der Eingriff der Noppe No in die Aussparung Sp beendet wird, wodurch dann der Gehäusekern Bo/De aus dem Schaft Sc gezogen werden kann.

Besonders m auf jenen Flächen des Bodens Bo und / oder des Deckels De, die nach dem Hineinschieben von außen gut zugänglich sind - vgl. die Figuren 2 und 4 - , die genannten Bedienelemente Ta, also z.B. Tasten, und / oder Anzeigeelemente Ta, also z.B. Lämpchen und / oder ein LCD-Element, anbringen zu können, kann der Schaft Sc U-förmig sein, vgl. die Figuren 2 und 4. Die Schenkel des Schaftes Sc können dann ihrerseits einen - ebenfalls U-förmigen, in der Figur 3 angedeuteten Querschnitt aufweisen, deren nach Innen gerichteten Innenschenkel ihrerseits auf ihren Innenseiten die Innenoberflächen In des Schaftes Sc aufweisen. Der Gehäusekern Bo/De weist dann dort, wo er im hineingeschobenen Zustand die betreffenden Innenoberflächen In der Innenschenkel des Schaftes Sc berührt, seine Außenoberflächen Au auf.

## Patentansprüche

1. Gegen Wasser und Staub schützendes, vom Benutzer von Zeit zu Zeit leicht zu öffnendes und leicht wieder dicht zu verschließendes Gehäuse (Bo/De, Sc) für eine elektronische Anordnung (Ba)
z.B. für den Schlüsselteil (Bo/De, Sc) eines fern steuerbaren Kfz-Schließsystemes, wobei im Schlüs selteil (Bo/De, Sc) von Zeit zu Zeit die Batterie (Ba) auszutauschen ist,
enthaltend einen Gehäusekern (Bo/De) mit einem Deckel (De), einen Boden (Bo) sowie einen elastischen Dichtungsring (Di) zwischen dem Deckel (De) und dem Boden (Bo),
**dadurch gekennzeichnet,**
- daß der montierte Gehäusekern (Bo/De) keilförmig ist, indem zwei gegenüberliegende Außenoberflächen (Au) dieses Gehäusekernes (Bo/De) zueinander in einer Längsachsenrichtung eine keilförmige Form bilden, wenn der Deckel (De) auf den Dichtungsring (Di) und dieser Dichtungsring (Di) auf den Boden (Bo) gelegt und der Deckel (De) gegen den Boden (Bo) gepreßt ist,
- daß ein Schaft (Sc) mit zwei gegenüberliegenden keilförmigen Innenoberflächen (In), welche an die keilförmigen Außenoberflächen (Au) des Gehäusekernes (Bo/De) mehr oder weniger angepaßt sind, angebracht ist, und
- daß dann, wenn der Gehäusekern (Bo/De) in Längsrichtung in den Schaft (Sc) hineingeschoben ist, die keilförmigen Innenoberflächen (In) des Schaftes (Sc) so auf die keilförmigen Außenoberflächen (Au) des Gehäusekernes (Bo/De) drücken, daß der Dichtungsring (Di) gequetscht ist und dadurch den Wasser- und Staubschutz für die Anordnung (Ba) bewirkt.

2. Gehäuse (Bo/De, Sc) nach Patentanspruch 1,
**dadurch gekennzeichnet,**
- daß der Boden (Bo), der Deckel (De) und der Schaft (Sc) aus Kunststoff bestehen (Spritzguß).

3. Gehäuse (Bo/De, Sc) nach Patentanspruch 1 oder 2,
**dadurch gekennzeichnet,**
- daß der Schaft (Sc) und / oder der Gehäusekern (Bo/De) eine elastische Zunge mit einer Noppe (No) enthält,
- daß die Noppe (No), wenn der Gehäusekern (Bo/De) in den Schaft (Sc) geschoben ist, als ein Widerhaken (No) in eine Aussparung (Sp) des Gehäusekernes (Bo/De) bzw. des Schaftes (Sc) eingreift, und
- daß dann, wenn der Gehäusekern (Bo/De) in den Schaft (Sc) geschoben ist, die Zunge von außen her so drückbar ist, daß der Eingriff der Noppe (No) in die Aussparung (Sp) beendet wird.

4. Gehäuse (Bo/De, Sc) nach einem der vorhergehenden Patentansprüche,
**dadurch gekennzeichnet,**
- daß der Schaft (Sc) U-förmig ist,
- daß die Schenkel des Schaftes (Sc) ihrerseits einen auch U-förmigen Querschnitt aufweisen, deren nach Innen gerichteten Innenschenkel ihrerseits auf ihren Innenseiten die Innenoberflächen (In) des Schaftes (Sc) aufweisen, und
- daß der Gehäusekern (Bo/De) dort, wo er im hineingeschobenen Zustand die betreffenden Innenoberflächen (In) der Innenschenkel berührt, seine keilförmig geformten Außenoberflächen (Au) aufweist.

## Claims

1. Housing (Bo/De, Sc) which protects against water and dust and which can from time to time easily be opened and easily be sealingly closed again by the user, for an electronic arrangement (Ba), for example for the key part (Bo/De, Sc) of a remotely controllable motor-vehicle locking system, the battery (Ba) having to be exchanged from time to time in the key part (Bo/De, Sc), containing a housing core (Bo/De) with a cover (De), a bottom (Bo) and an elastic sealing ring (Di) between the cover (De) and the bottom (Bo), characterized in that
- the assembled housing core (Bo/De) is wedge-shaped, in that two opposite outer surfaces (Au) of this housing core (Bo/De) constitute a wedge-shaped form relative to one another in a longitudinal axial direction when the cover (De) is laid onto the sealing ring (Di) and this sealing ring (Di) is laid onto the bottom (Bo) and the cover (De) is pressed against the bottom (Bo),
- a shank (Sc) with two opposite wedge-shaped inner surfaces (In), which are more or less matched to the wedge-shaped outer surfaces (Au) of the housing core (Bo/De), is attached, and,
- when the housing core (Bo/De) is pushed into the shank (Sc) in the longitudinal direction, the wedge-shaped inner surfaces (In) of the shank (Sc) press onto the wedge-shaped outer surfaces (Au) of the housing core (Bo/De) in such a way that the sealing ring (Di) is pinched and thereby affords protection against water and dust for the arrangement (Ba).

2. Housing (Bo/De, Sc) according to Patent Claim 1, characterized in that
- the bottom (Bo), the cover (De) and the shank (Sc) consist of plastic (injection moulding).

3. Housing (Bo/De, Sc) according to Patent Claim 1 or 2, characterized in that
- the shank (Sc) and/or the housing core (Bo/De) contains an elastic tongue having a boss (No),
- when the housing core (Bo/De) is pushed into the shank (Sc), the boss (No) engages as a barb (No) into a recess (Sp) of the housing core (Bo/De) or of the shank (Sc), and,
- when the housing core (Bo/De) is pushed into the shank (Sc), the tongue can be pressed from outside in such a way that the engagement of the boss (No) into the recess (Sp) is terminated.

4. Housing (Bo/De, Sc) according to one of the preceding patent claims, characterized in that
- the shank (Sc) is U-shaped,
- the legs of the shank (Sc) themselves also have a U-shaped cross-section, their inward-directed inner legs themselves having on their insides the inner surfaces (In) of the shank (Sc), and
- the housing core (Bo/De) has its wedge-shaped outer surfaces (Au) at the location where it touches the respective inner surfaces (In) of the inner legs when it is in the pushed-in state.

## Revendications

1. Boîtier (Bo/De, Sc) pour un dispositif électronique (Ba), protégeant contre l'eau et la poussière, facile à ouvrir de temps en temps par l'utilisateur et facile à refermer d'une manière étanche,
par exemple, pour le boîtier à clé (Bo/De, Sc) d'un système de verrouillage à télécommande pour véhicule à moteur, dans lequel, dans le boîtier à clé (Bo/De, Sc) la pile (Ba) doit être changée de temps en temps,
comportant un corps de boîtier (Bo/De) avec un couvercle (De), un fond (Bo), ainsi qu'un joint d'étanchéité élastique (Di) entre le couvercle (De) et le fond (Bo), caractérisé en ce que,
- le corps de boîtier monté (Bo/De) a la forme d'un coin, deux surfaces extérieures opposées (Au) de ce corps de boîtier (Bo/De) formant ensemble un coin dans la direction de l'axe longitudinal, lorsque le couvercle (De) est appliqué sur le joint d'étanchéité (Di) que ce joint d'étanchéité (Di) est en place sur le fond (Bo) et que le couvercle (De) est pressé contre le fond (Do),
- en ce qu'un étrier (Sc) comportant deux surfaces intérieures opposées en forme de coin (In), qui sont plus ou moins adaptées aux surfaces extérieures en forme de coin (Au) du corps de boîtier (Bo/De), est mis en place, et
- en ce que, lorsque le corps de boîtier (Bo/De) est inséré dans l'étrier (Sc) dans le sens de la longueur, les surfaces intérieures en forme de coin (In) de l'étrier (Sc), appuient sur les surfaces extérieures (Au) en forme de coin du corps de boîtier (Bo/De), de telle manière que le joint d'étanchéité (Di) est écrasé et assure ainsi la protection contre l'eau et la poussière pour le dispositif (Ba).

2. Boîtier (Bo/De, Sc) selon la revendication 1, caractérisé en ce que,
- le fond (Bo), le couvercle (De) et l'étrier (Sc) sont en une matière synthétique (moulage par injection).

3. Boîtier (Bo/De, Sc) selon les revendications 1 ou 2,
caractérisé en ce que;
- l'étrier (Sc) et/ou le corps de boîtier (Bo/De) comportent une languette élastique pourvue d'un bouton (No),
- en ce que le bouton (No), lorsque le corps de boîtier (Bo/De) est inséré dans l'étrier (Sc), vient en prise comme un crochet (No) dans un évidement (Sp) du corps de boîtier (Bo/De) ou de l'étrier (Sc), et
- en ce que, lorsque le corps de boîtier (Bo/De) est inséré dans l'étrier (Sc), la languette peut être pressée de l'extérieur de telle manière que l'accrochage par le bouton (No) dans l'évidement (Sp) est supprimé.

4. Boîtier (Bo/De, Sc) selon l'une des revendications précédentes,
caractérisé en ce que,
- l'étrier (Sc) a la forme d'un U,
- en ce que les branches de l'étrier (Sc) présentent également de leur côté une section en forme de U, dont les branches intérieures dirigées vers l'intérieur présentent de leur côté sur leurs faces latérales les surfaces intérieures (In) de l'étrier (Sc), et
- en ce que le corps de boîtier (Bo/De) présente ses surfaces extérieures (Au) en forme de coin, là où dans l'état inséré il vient en contact des surfaces intérieures correspondantes (In) des branches intérieures.
